# EUROPÄISCHE PATENTSCHRIFT

(11) **EP 0 845 076 B1**
(45) Veröffentlichungstag und Bekanntmachung des Hinweises auf die Patenterteilung: **20.06.2001**
(21) Anmeldenummer: 96946092.2
(22) Anmeldetag: 18.12.1996
(51) Int. Cl.: F02M 31/18, F02M 69/32

(54) **MEHRZYLINDRIGE FREMDGEZÜNDETE BRENNKRAFTMASCHINE**
MULTI-CYLINDER SPARK-IGNITION INTERNAL COMBUSTION ENGINE
MOTEUR A COMBUSTION INTERNE POLYCYLINDRE A ALLUMAGE COMMANDE

(30) Priorität: 19.06.1996 DE 19624368
(43) Veröffentlichungstag der Anmeldung: 03.06.1998
(73) Patentinhaber: ROBERT BOSCH GMBH, 70442 Stuttgart (DE)
(72) Erfinder: ABIDIN, Anwar, D-71229 Leonberg (DE); EICHENDORF, Andreas, D-73614 Schorndorf (DE); VOGEL, Christof, D-96120 Bischberg (DE)
(86) Internationale Anmeldenummer: DE9602440
(87) Internationale Veröffentlichungsnummer: WO9748898

(56) Entgegenhaltungen:
- EP-A- 0 509 982
- GB-A- 1 229 914
- GB-A- 2 248 087

## Beschreibung

### Stand der Technik

Die Erfindung geht aus von einer mehrzylindrigen fremdgezündeten Brennkraftmaschine nach der Gattung des Anspruchs 1. Es ist bereits eine Brennkraftmaschine bekannt (GB-OS 2 248 087), die ein Ansaugrohr besitzt, das in ein Sammelsaugrohr übergeht, von dem Einzelsaugrohre zu den einzelnen Brennräumen beziehungsweise zu den einzelnen Zylindern der Brennkraftmaschine abzweigen. Mittels an den Einzelsaugrohren stromaufwärts von Einlaßventilen der Brennräume angeordneter Brennstoffeinspritzventile kann Brennstoff in die Einzelsaugrohre abgegeben werden, um so ein zündfähiges Brennstoff-Luft-Gemisch aufzubereiten, das bei offenen Einlaßventilen in die Brennräume einströmt. Ein elektronisches Motorsteuergerät steuert dabei abhängig von der angesaugten Luftmasse der Brennkraftmaschine sowie von anderen Motorbetriebsparametern die von den Brennstoffeinspritzventilen abgegebene Brennstoffmenge.

Zusätzlich zur Einspritzung mittels den einzelnen Brennstoffeinspritzventilen besitzt die Brennkraftmaschine ein weiteres Einspritzventil, das Teil einer zentralen Brennstoffverdampfungseinrichtung ist, die Brennstoffdampf bereitstellen kann, der dann stromaufwärts eines zum Beispiel in Form einer Drosselklappe ausgebildeten Drosselorgans in das Ansaugrohr abgegeben wird. Die Zufuhr von Brennstoffdampf mittels der Brennstoffverdampfungseinrichtung ist dabei auf den unteren Lastbereich, insbesondere auf den Leerlaufbereich der Brennkraftmaschine, beschränkt. Im oberen Lastbereich, insbesondere in der Vollast hingegen, liefern ausschließlich die den Brennräumen beziehungsweise den Zylindern zugeordneten Brennstoffeinspritzventile den benötigten Brennstoff. Durch die Zufuhr von dampfförmigem Brennstoff in das Ansaugrohr soll während der Startphase der Brennkraftmaschine eine ansonsten stattfindende Rückkondensation des Brennstoffdampfes an kalten Wänden der Brennkraftmaschine weitestgehend verhindert werden, um so die Emissionen an schädlichen Abgasbestandteilen, insbesondere von Kohlenwasserstoffen, stark senken zu können.

Dabei ist es jedoch problematisch, daß abhängig von der Zündfolge der einzelnen Zylinder beziehungsweise deren Ansaugfolge durch eine gegenseitige Beeinflussung der Zylinder beim Ansaugen des von der Brennstoffverdampfungseinrichtung aufbereiteten Brennstoffdampfes aufgrund von Saugrohrschwingungen dieser nur ungleichmäßig auf die einzelnen Brennräume der Zylinder verteilt wird. Dies hat aber eins Erhöhung der Emissionen an schädlichen Abgasbestandteilen zur Folge, so daß ein Einhalten extrem niedriger Abgaswerte und eines ruhigen Laufs der Brennkraftmaschine nicht möglich ist.

Bekannt ist durch die EP-A-0 509 982 eine Kaltstarteinrichtung einer Brennkraftmaschine. Die Kaltstarteinrichtung weist jeweils für zwei Zylinder der Brennkraftmaschine eine Verdampfungskammer auf, von der aus zwei separate Verbindungskanäle direkt zu den beiden benachbarten Einlaßkanälen der Brennkraftmaschine führen, wobei den benachbarten Einlaßkanälen keine Zylinder der Brennkraftmaschine in einer bestimmten Zündfolge zugeordnet sind.

### Vorteile der Erfindung

Die erfindungsgemäße Brennkraftmaschine mit den kennzeichnenden Merkmalen des Anspruchs 1 hat demgegenüber den Vorteil, daß sich eine nahezu gleichmäßige Verteilung des von der Brennstoffverdampfungseinrichtung aufbereiteten Brennstoffdampfes beziehungsweise eines Brennstoff-Luft-Gemisches auf die einzelnen Brennräume der Brennkraftmaschine erzielen läßt, so daß ein Einhalten extrem niedriger Abgaswerte sowie eines ruhigen Laufs der Brennkraftmaschine möglich ist.

Durch die in den Unteransprüchen aufgeführten Maßnahmen sind vorteilhafte Weiterbildungen und Verbesserungen der im Anspruch 1 angegebenen Brennkraftmaschine möglich.

### Zeichnung

Ausführungsbeispiele der Erfindung sind in der Zeichnung vereinfacht dargestellt und in der nachfolgenden Beschreibung näher erläutert. Es zeigen Figur 1 in Schnittdarstellung eine Teilansicht einer erfindungsgemäßen Brennkraftmaschine, Figur 2 ein erstes erfindungsgemäßes Ausführungsbeispiel eines Leitungssystems für die Brennkraftmaschine, Figur 3 ein zweites erfindungsgemäßes Ausführungsbeispiel eines Leitungssystems für die Brennkraftmaschine.

### Beschreibung der Ausführungsbeispiele

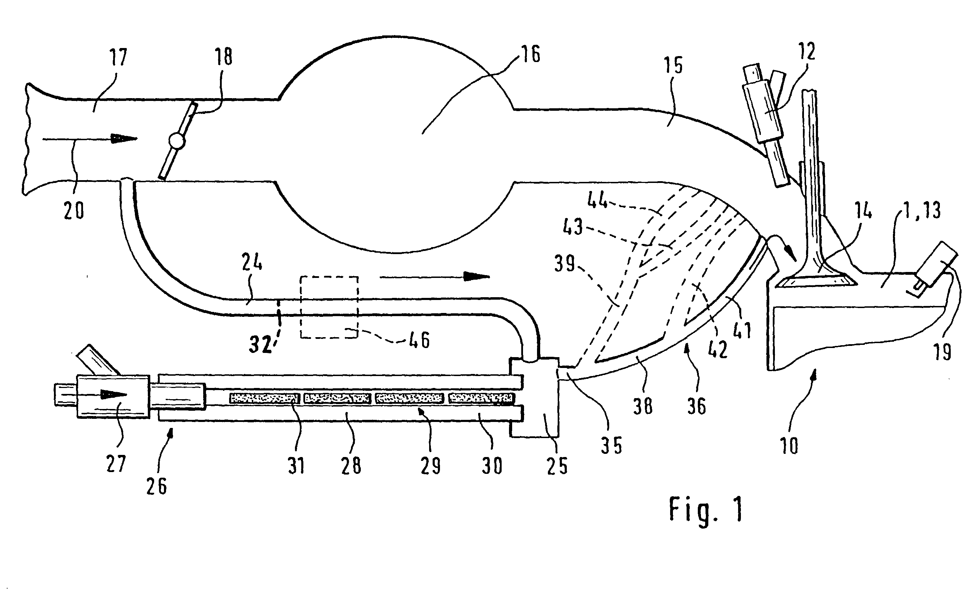

In Figur 1 ist in Schnittdarstellung eine Teilansicht einer Brennkraftmaschine 10 dargestellt, die vier Zylinder 1, 2, 3, 4 beziehungsweise vier Brennräume 13 aufweist, wobei in Figur 1 nur ein einzelner Zylinder 1 mit einem Brennraum 13 dargestellt ist. Jeder Brennraum 13 verfügt über zumindest ein Einlaßventil 14 und eine Zündkerze 19. Stromaufwärts des Einlaßventils 14 ist zumindest ein Brennstoffeinspritzventil 12 an einem Einzelsaugrohr 15 der Brennkraftmaschine 10 vorgesehen, das Brennstoff in das Einzelsaugrohr 15 in Richtung des Einlaßventils 14 abgeben kann. Die vier Einzelsaugrohre 15 gehen zum Beispiel von einem Sammelsaugrohr 16 aus, das Teil eines weiterführenden Ansaugrohres 17 der Brennkraftmaschine 10 ist. In dem Ansaugrohr 17 ist ein Drosselorgan 18 zur Steuerung der von der Brennkraftmaschine 10 angesaugten Luftmenge untergebracht, das beispielsweise in Form einer Drosselklappe ausgebildet und drehbar im Ansaugrohr 17 untergebracht ist. Die von der Brennkraftmaschine 10 aus der Umgebung angesaugte Luft strömt über einen nicht näher dargestellten Luftfilter in Richtung eines in Figur 1 eingezeichneten Pfeils 20 in das Ansaugrohr 17 ein, wo sie bei geöffneter Drosselklappe 18 in das Sammelsaugrohr 16 weiterströmt, um von diesem über die Einzelsaugrohre 15 auf die einzelnen Brennräume 13 der Brennkraftmaschine 10 aufgeteilt zu werden.

Stromaufwärts der Drosselklappe 18 zweigt eine Leerlaufluftleitung 24 vom Ansaugrohr 17 ab, welche zu einem Mischraum 25 einer Brennstoffverdampfungseinrichtung 26 führt. In der Leerlaufluftleitung 24 kann eine Drossel 32 zum Beispiel in Form einer Blende vorgesehen sein, welche die in der Leerlaufluftleitung 24 strömende Luftmenge durch Drosselung begrenzt. Die Brennstoffverdampfungseinrichtung 26 verfügt zum Beispiel über ein zentrales Einspritzventil 27, das mit einem Heizvorsatz 23 ausgestattet ist. Der Heizvorsatz 28 beinhaltet eine beispielsweise in bekannter Weise elektrisch beheizbare Verdampferstruktur 29 für flüssigen Brennstoff und hat hierzu Widerstands-Heizelemente 31, die zum Beispiel einen positiven Temperaturkoeffizienten (PTC) oder einen negativen Temperaturkoeffizienten (NTC) aufweisen können. Zur Steuerung der Widerstands-Heizelemente 31 kann beispielsweise ein nicht näher dargestelltes elektronisches Steuergerät vorgesehen sein. Die Widerstands-Heizelemente 31 sind in einem Verdampfergehäuse 30 untergebracht und zum Beispiel plattenförmig ausgebildet und weisen gegebenenfalls eine poröse Oberfläche auf. Von dem Mischraum 25 der Brennstoffverdampfungseinrichtung 26 geht eine Zentralleitung 35 aus, die in ein verzweigtes Leitungssystem 36 übergeht, das eine Strömungsverbindung der einzelnen Brennräume 13 der Brennkraftmaschine 10 mit dem Mischraum 25 herstellt. Das Leitungssystem 36 ist zu den Einzelsaugrohren 15 der Brennkraftmaschine 10 erfindungsgemäß derart verzweigt ausgebildet, daß nur jeweils Brennräume 13 beziehungsweise Zylinder 1, 2, 3, 4, die nicht in direkter Zündfolge zueinander stehen, paarweise miteinander und gemeinsam über die Zentralleitung 35 mit der Brennstoffverdampfungseinrichtung 26 beziehungsweise dem Mischraum 25 verbunden sind.

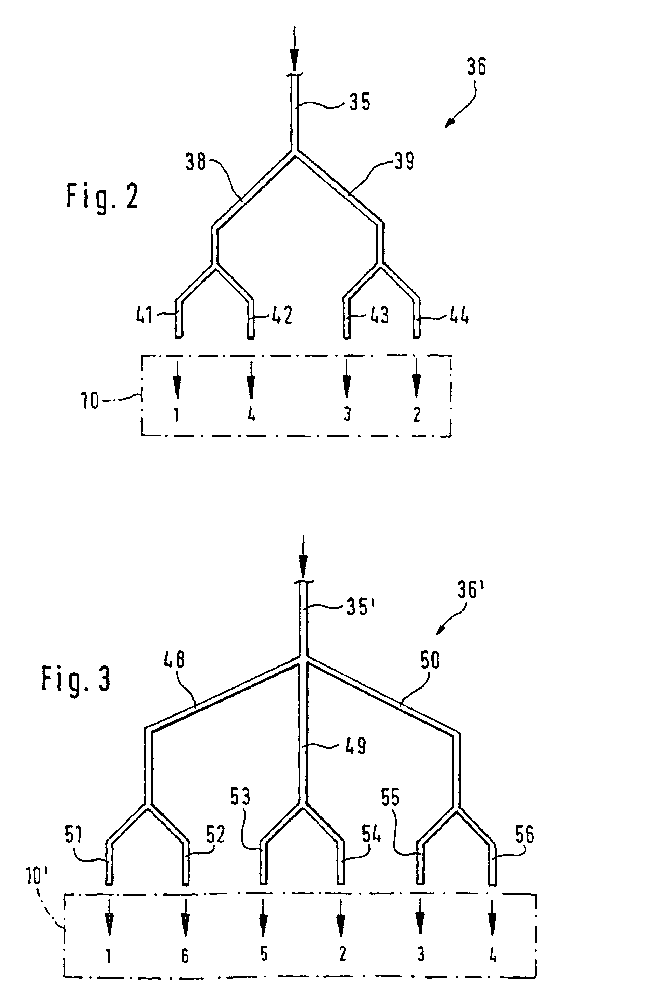

In Figuren 1 und 2 ist das erfindungsgemäße Leitungssystem 36 für eine vierzylindrige fremdgezündete Brennkraftmaschine 10 näher gezeigt. Die in Figur 2 durch eine gestrichelte Linie angedeutete Brennkraftmaschine 10 besitzt vier Zylinder 1, 2, 3 und 4, die abweichend von der Darstellung in Figur 2 in Wirklichkeit in der Reihenfolge 1, 2, 3 und 4 nacheinander angeordnet sind und mit einer Zündfolge zum Beispiel 1-3-4-2 betrieben werden. Die von der Brennstoffverdampfungseinrichtung 26 wegführende Zentralleitung 35 verzweigt sich in eine erste Zylinderpaarleitung 38 und in eine zweite Zylinderpaarleitung 39. Die erste Zylinderpaarleitung 38 verzweigt sich weiter in eine erste Zylinderleitung 41 für den ersten Zylinder 1 und in eine zweite Zylinderleitung 42 für den vierten Zylinder 4. In gleicher Weise verzweigt sich die zweite Zylinderpaarleitung 39 in eine dritte Zylinderleitung 43 für den dritten Zylinder 3 und in eine vierte Zylinderleitung 44 für den zweiten Zylinder 2. Die sich ergebenden Verzweigungsstellen der Leitungen 35, 38, 39 und 38, 41, 42 und 39, 43, 44 weisen eine Y-Form auf, mit Schenkeln, welche vorzugsweise einen möglichst spitzen Winkel zwischen den ableitenden Leitungen 41 und 42; 43 und 44 einschließen, um so durch einen erhöhten Strömungswiderstand eine gegenseitige Beeinflussung der paarweise miteinander verbundenen Zylinder zu minimieren. Der Vollständigkeit halber ist zu erwähnen, daß es auch möglich ist, die Verzweigungsstellen in T-Form auszubilden. Da die erste Zylinderleitung 41 an den ersten Zylinder 1, die zweite Zylinderleitung 42 an den vierten Zylinder 4, die dritte Zylinderleitung 43 an den dritten Zylinder 3 und die vierte Zylinderleitung 44 an den zweiten Zylinder 2 angeschlossen ist, ergibt sich bei der vorgesehenen Zündfolge der Zylinder 1-3-4-2, also Zündung mittels Zündkerzen 19 zuerst von Zylinder 1, dann Zylinder 3, dann Zylinder 4 und abschließend Zylinder 2, daß nur jeweils Brennräume beziehungsweise Zylinder, die nicht in direkter Zündfolge betrieben werden, paarweise miteinander und über die Zylinderpaarleitungen 38, 39 und die Zentralleitung 35 mit der Brennstoffverdampfungseinrichtung 26 verbunden sind.

Die Leitungen 35, 38, 39, 41 bis 44 des Leitungssystems 36 sind vorzugsweise in Form von Rohren oder Schläuchen ausgebildet, die aus einem elastischen Material mit geringer Wärmeleitfähigkeit, zum Beispiel aus Kunststoff, bestehen. Der Anschluß der Zylinderleitungen 41 bis 44 beziehungsweise die Einleitung des Brennstoffdampfes in die Einzelsaugrohre 15 erfolgt, wie in Figur 1 dargestellt ist, in relativer Nähe der Einlaßventile 14 der Brennkraftmaschine 10.

Der Betrieb der Brennstoffverdampfungseinrichtung 26 ist vorzugsweise auf den unteren Lastbereich, insbesondere auf den Leerlaufbereich der Brennkraftmaschine 10, beschränkt. Es ist aber auch möglich, den Betrieb der Brennstoffverdampfungseinrichtung 26 auch im an den Leerlaufbereich anschließenden Teillastbereich und sogar bis kurz vor dem Erreichen der Vollast der Brennkraftmaschine vorzusehen. Insbesondere im Bereich der oberen Teillast kann sich dabei ein Brennstoff-Luft-Gemisch in den Leitungen 35, 38, 39, 41, 42, 43, 44 ergeben, das zu fett ist, also einen zum Erreichen der Zündung mittels Zündkerzen 19 zu hohen Brennstoffanteil aufweist. Ein Erhöhen des Luftanteils ist nicht möglich, da die dem Mischraum 25 zugeführte Luftmenge zum Beispiel von in der Leerlaufluftleitung 24 vorgesehenen Festdrossel 32 konstant gehalten wird. Dies hat jedoch für die Verbrennung in den Brennräumen 13 der Zylinder 1 bis 4 keinen Einfluß, da nach dem Einspeisen des zu fetten Brennstoff-Luft-Gemisches über die Leitungen 41 bis 44 sich durch Vermischen mit der angesaugten Luft in den Einzelsaugrohren 15 wieder ein zündfähiges Brennstoff-Luft-Gemisch einstellt. Bei der Einleitung des Brennstoff-Luft-Gemisches mittels der Brennstoffverdampfungseinrichtung 26 bleiben die Brennstoffeinspritzventile 12 inaktiv, das heißt ohne Brennstoff abzuspritzen. Lediglich das zentrale Einspritzventil 27 der Brennstoffverdampfungseinrichtung 26 gibt Brennstoff in flüssiger Form ab, der dann in die elektrisch beheizte Verdampferstruktur 29 gelangt, um in dieser aufgeheizt zu werden und zumindest teilweise zu verdampfen. Aufgrund der beim Aufheizen stattfindenden Volumenänderung des flüssigen Brennstoffs beim Übergang in die Dampfphase wird dieser in den Mischraum 25 befördert. Gleichzeitig wird in den Mischraum 25 über die Leerlaufluftleitung 24 Luft eingebracht, um so im Mischraum 25 im Leerlaufbereich ein zündfähiges Brennstoff-Luft-Gemisch mit λ=1 zu erhalten, das dann über die Zentralleitung 35 in das Leitungssystem 36 abgegeben wird. Der Brennstoffanteil des Brennstoff-Luft-Gemisches läßt sich dabei durch die Abspritzmenge des zentralen Einspritzventils 27 der Brennstoffverdampfungseinrichtung 26 steuern. Die dem Mischraum 25 zugeführte Luftmenge sollte dabei im wesentlichen der beim Leerlaufbetrieb der Brennkraftmaschinen üblicherweise benötigten Leerlaufluftmenge entsprechen. Es ist aber auch möglich, eine in Figur 1 gestrichelt dargestellte Leerlaufregeleinrichtung 46 an der Leerlaufluftleitung 24 vorzusehen, um die dem Mischraum 25 zugeführte Luftmenge steuern zu können. Nach Abschluß der Warmlaufphase oder bei einem Brennstoffmehrbedarf, zum Beispiel bei scharfem Beschleunigen, bei Bergauffahrt oder dergleichen, kann zusätzlich oder anstelle der Gemischaufbereitung mittels der Brennstoffverdampfungseinrichtung 26 auf herkömmliche Einzeleinspritzung mit den Brennstoffeinspritzventilen 12 umgeschaltet werden.

Wie bereits erläutert, werden bei dem in Figur 2 dargestellten Leitungssystem 36 nur Zylinder, die mit nicht direkter Zündfolge beziehungsweise Ansaugfolge betrieben werden, miteinander und mit der Brennstoffverdampfungseinrichtung 26 verbunden, so daß für die in der Abfolge 1-3-4-2 nacheinander ansaugenden Zylinder 1, 2, 3, 4 sich unterschiedlich lange Dampfleitungswege zu dem Mischraum 25 ergeben. Dabei läßt sich durch eine geeignete Längenwahl der Leitungen 38, 39 und 41 bis 44 eine gegenseitige Beeinflussung aufgrund von Saugrohrschwingungen beim Ansaugen der Zylinder nahezu vollständig vermeiden, so daß sich eine gleichmäßige Aufteilung des im Mischraum 25 gebildeten Brennstoff-Luft-Gemisches auf die einzelnen Zylinder 1, 2, 3 und 4 der Brennkraftmaschine 10 beziehungsweise Brennräume 13 ergibt.

In Figur 3 ist ein zweites erfindungsgemäßes Ausführungsbeispiel der Brennkraftmaschine gezeigt, bei dem alle gleichen oder gleichwirkenden Teile mit denselben Bezugszeichen der Figuren 1 und 2 gekennzeichnet sind. In Figur 3 ist durch eine gestrichelte Linie eine Brennkraftmaschine 10' angedeutet, die sechs Zylinder 1, 2, 3, 4, 5 und 6 besitzt, welche abweichend von der Darstellung in Figur 3 in Wirklichkeit in der Reihenfolge 1, 2, 3, 4, 5 und 6 nacheinander angeordnet sind und mit einer Zündfolge zum Beispiel 1-5-3-6-2-4 betrieben werden. Die von der Brennstoffverdampfungseinrichtung 26 wegführende Zentralleitung 35' verzweigt sich in eine erste Zylinderpaarleitung 48, eine zweite Zylinderpaarleitung 49 und in eine dritte Zylinderpaarleitung 50. Die erste Zylinderpaarleitung 48 verzweigt sich weiter in eine erste Zylinderleitung 51 für den ersten Zylinder 1 und in eine zweite Zylinderleitung 52 für den sechsten Zylinder 6. Die zweite Zylinderpaarleitung 49 verzweigt sich weiter in eine dritte Zylinderleitung 53 für den fünften Zylinder 5 und in eine vierte Zylinderleitung 54 für den zweiten Zylinder 2. Die dritte Zylinderpaarleitung 50 verzweigt sich weiter in eine fünfte Zylinderleitung 55 für den dritten Zylinder 3 und in eine sechste Zylinderleitung 56 für den vierten Zylinder 4. Die sich dabei ergebenden Verzweigungsstellen der Leitungen 48, 51, 52 und 49, 53, 54 und 50, 55, 56 des Leitungssystems 36' weisen eine Y-Form auf, mit Schenkeln, welche vorzugsweise einen möglichst spitzen Winkel zwischen den ableitenden Leitungen 51, 52; 53, 54; 55, 56 einschließen. Da die erste Zylinderleitung 51 an den ersten Zylinder 1, die zweite Zylinderleitung 52 an den sechsten Zylinder 6, die dritte Zylinderleitung 53 an den fünften Zylinder 5, die vierte Zylinderleitung 54 an den zweiten Zylinder 2, die fünfte Zylinderleitung 55 an den dritten Zylinder 3 und die sechste Zylinderleitung 56 an den vierten Zylinder 4 angeschlossen ist, ergibt sich bei der vorgesehenen Zündfolge 1-5-3-6-2-4 der Zylinder 1 bis 6, daß nur jeweils Brennräume beziehungsweise Zylinder, die nicht in direkter Zündfolge betrieben werden, paarweise miteinander und über gemeinsame Leitungen 48, 49, 50 und über die Zentralleitung 35' mit der Brennstoffverdampfungseinrichtung 16 verbunden sind. Damit sind für die in der Abfolge 1-5-3-6-2-4 nacheinander ansaugenden Zylinder 1 bis 6 wiederum unterschiedlich lange Dampfleitungswege zu dem Mischraum 25 vorhanden, so daß eine gleichmäßige Verteilung des Brennstoff-Luft-Gemisches auf die einzelnen Brennräume 13 ohne gegenseitige Beeinflussung der Zylinder 1 bis 6 möglich ist

## Patentansprüche

1. Mehrzylindrige fremdgezündete Brennkraftmaschine, die eine Ansaugeinrichtung besitzt, von der Einzelsaugrohre (15) zu den Brennräumen (13) beziehungsweise Zylindern der Brennkraftmaschine abzweigen, mit je Brennraum (13) zumindest einem Einlaßventil (14), und mit einem stromaufwärts des Einlaßventils (14) vorgesehenen Brennstoffeinspritzventil (12), das Brennstoff in das Einzelsaugrohr (15) abgibt, und einer Brennstoffverdampfungseinrichtung (26), die ein Brennstoff-Luft-Gemisch bei bestimmten Betriebsbereichen der Brennkraftmaschine, insbesondere im unteren Lastbereich, bereitstellt, wobei die Brennstoffverdampfungseinrichtung (26) über Leitungen (38, 39 und 41 bis 44; 48, 49, 50 und 51 bis 56) mit den Einzelsaugrohren (15) der Brennkraftmaschine (10) verbunden ist, dadurch gekennzeichnet, daß die Leitungen (38, 39 und 41 bis 44; 48, 49, 50 und 51 bis 56) sich stromabwärts der Brennstoffverdampfungseinrichtung (26) in der Weise verzweigen, daß nur jeweils Brennräume (13) beziehungsweise Zylinder (1 bis 4 beziehungsweise 1 bis 6), die nicht in direkter Zündfolge (1-3-4-2 beziehungsweise 1-5-3-6-2-4) nacheinander betrieben werden, paarweise über Zylinderleitungen (41 bis 44 beziehungsweise 51 bis 56) miteinander und mit der Brennstoffverdampfungseinrichtung (26) verbunden sind.

2. Brennkraftmaschine nach Anspruch 1, dadurch gekennzeichnet, daß nur Brennräume (13) beziehungsweise Zylinder (1, 2, 3, 4) mit voneinander größtem zeitlichen Abstand der Zündfolge paarweise über Zylinderleitungen miteinander verbunden sind.

3. Brennkraftmaschine nach Anspruch 1, dadurch gekennzeichnet, daß bei einer vier Zylinder (1, 2, 3, 4) aufweisenden Brennkraftmaschine (10) von einer von der Brennstoffverdampfungseinrichtung (26) ausgehenden Zentralleitung (35) zwei Zylinderpaarleitungen (38, 39) abzweigen, wobei sich jede Zylinderpaarleitung (38; 39) in zwei Zylinderleitungen (41, 42; 43, 44) weiterverzweigt, die in Einzelsaugrohre (15) in nicht direkter Zündfolge (1-3-4-2) betriebener Zylinder (1, 4; 2, 3) münden.

4. Brennkraftmaschine nach Anspruch 1, dadurch gekennzeichnet, daß bei einer sechs Zylinder (1, 2, 3, 4, 5, 6) aufweisenden Brennkraftmaschine (10') von einer von der Brennstoffverdampfungseinrichtung (26) ausgehenden Zentralleitung (35') drei Zylinderpaarleitungen (48, 49, 50) abzweigen, wobei sich jede Zylinderpaarleitung (48; 49; 50) in zwei Zylinderleitungen (51, 52; 53, 54; 55, 56) weiterverzweigt, die in Einzelsaugrohre (15) in nicht direkter Zündfolge (1-5-3-6-2-4) betriebener Zylinder (1, 6; 5, 2; 3, 4) münden.

5. Brennkraftmaschine nach Anspruch 3 oder 4, dadurch gekennzeichnet, daß die Zylinderleitungen (41 bis 44; 51 bis 56) in Nähe der Einlaßventile (14) in die Einzelsaugrohre (15) münden.

6. Brennkraftmaschine nach Anspruch 5, dadurch gekennzeichnet, daß die Verzweigungsstellen dreier Leitungen (38, 41, 42; 39, 43, 44; 48, 51, 52; 49, 53, 54; 50, 55, 56) eine Y-Form aufweisen.

7. Brennkraftmaschine nach Anspruch 5 oder 6, dadurch gekennzeichnet, daß die Verzweigungsstellen dreier Leitungen (38, 41, 42; 39, 43, 44; 48, 51, 52; 49, 53, 54; 50, 55, 56) einen möglichst spitzen Winkel zwischen den Leitungen (41, 42; 43, 44; 51, 52; 53, 54; 55, 56) einschließen.

## Claims

1. Multi-cylinder spark-ignition internal combustion engine, which possesses an intake device, from which individual suction pipes (15) branch off to the combustion spaces (13) or cylinders of the internal combustion engine, with, for each combustion space (13), at least one inlet valve (14) and a fuel injection valve (12) which is provided upstream of the inlet valve (14) and discharges fuel into the individual suction pipe (15), and with a fuel vaporization device (26) which provides a fuel/air mixture for defined operating ranges of the internal combustion engine, in particular in the lower load range, the fuel vaporization device (26) being connected to the individual suction pipes (15) of the internal combustion engine (10) via lines (38, 39 and 41 to 44; 48, 49, 50 and 51 to 56), characterized in that the lines (38, 39 and 41 to 44; 48, 49, 50 and 51 to 56) are branched downstream of the fuel vaporization device (26) in such a way that in each case only combustion spaces (13) or cylinders (1 to 4 or 1 to 6) which are operated successively in an indirect ignition sequence (1-3-4-2 or 1-5-3-6-2-4) are connected to one another and to the fuel vaporization device (26) in pairs via cylinder lines (41 to 44 or 51 to 56).

2. Internal combustion engine according to Claim 1, characterized in that only combustion spaces (13) or cylinders (1, 2, 3, 4) having the greatest ignition-sequence time interval are connected to one another in pairs via cylinder lines.

3. Internal combustion engine according to Claim 1, characterized in that, in an internal combustion engine (10) having four cylinders (1, 2, 3, 4), two cylinder pair lines (38, 39) branch off from a central line (35) emanating from the fuel vaporization device (26), each cylinder pair line (38; 39) being further branched into two cylinder lines (41, 42; 43, 44) which issue into individual suction pipes (15) of cylinders (1, 4; 2, 3) operated in an indirect ignition sequence (1-3-4-2).

4. Internal combustion engine according to Claim 1, characterized in that, in an internal combustion engine (10') having six cylinders (1, 2, 3, 4, 5, 6), three cylinder pair lines (48, 49, 50) branch off from a central line (35') emanating from the fuel vaporization device (26), each cylinder pair line (48; 49; 50) being further branched into two cylinder lines (51, 52; 53, 54; 55, 56) which issue into individual suction pipes (15) of cylinders (1, 6; 5, 2; 3, 4) operated in an indirect ignition sequence (1-5-3-6-2-4).

5. Internal combustion engine according to Claim 3 or 4, characterized in that the cylinder lines (41 to 44; 51 to 56) issue into the individual suction pipes (15) in the vicinity of the inlet values (14).

6. Internal combustion engine according to Claim 5, characterized in that the branch points of the three lines (38, 41, 42; 39, 43, 44; 48, 51, 52; 49, 43, 54; 50, 55, 56) are Y-shaped.

7. Internal combustion engine according to Claim 5 or 6, characterized in that the branch points of the three lines (38, 41, 42; 39, 43, 44; 48, 51, 52; 49, 53, 54; 50, 55, 56) form as acute an angle as possible between the lines (41, 42; 43, 44; 51, 52; 53, 54; 55, 56) .

## Revendications

1. Moteur à combustion interne multicylindre à allumage commandé comportant une installation d'aspiration d'où partent les tubulures d'aspiration individuelles (15) reliées aux chambres de combustion (13) ou cylindres du moteur,
- chaque chambre de combustion (13) ayant au moins une soupape d'admission (14) et, en amont de la soupape d'admission (14), un injecteur de carburant (12) qui fournit le carburant à la tubulure individuelle (15) et
- une installation de vaporisation de carburant (26) qui fournit un mélange air-carburant pour certaines plages de fonctionnement du moteur, notamment la plage inférieure des charges,
- l'installation de vaporisation de carburant (26) étant reliée par des conduites (38, 39 et 41-44 ; 48, 49, 50 et 51-56) aux tubulures d'aspiration individuelles (15) du moteur à combustion interne (10),
caractérisé en ce que
les conduites (38, 39 et 41-44 ; 48, 49, 50 et 51-56) se divisent par paires en aval de l'installation de vaporisation de carburant (26) de façon que les chambres de combustion (13) ou cylindre (1-4 ou 1-6) qui ne se succèdent pas dans l'ordre direct d'allumage (1-3-4-2 ou 1-5-3-6-2-4) soient reliés par paires par des conduites de cylindres (41-44 ou 51-56), et à l'installation de vaporisation de carburant (26).

2. Moteur à combustion interne selon la revendication 1,
caractérisé en que
seules les chambres de combustion (13) ou cylindres (1, 2, 3, 4) séparés du plus grand intervalle de temps dans l'ordre d'allumage, sont reliés par paires par les conduites de cylindres.

3. Moteur à combustion interne selon la revendication 1,
caractérisé en que
dans un moteur à combustion interne (10) à quatre cylindres (1, 2, 3, 4), une conduite centrale (35) partant de l'installation de vaporisation de carburant (26) se ramifie en deux conduites de paires de cylindres (38, 39) et chaque conduite de paire de cylindres (38, 39) se ramifie en deux conduites de cylindres (41, 42 ; 43, 44) débouchant dans la tubulure d'aspiration indépendante (15) de cylindre (1, 4 ; 2, 3) qui ne fonctionne pas dans l'ordre d'allumage direct (1-3-4-2).

4. Moteur à combustion interne selon la revendication 1,
caractérisé en que
dans un moteur à combustion interne (10') à six cylindres (1, 2, 3, 4, 5, 6), la conduite centrale (35) partant de l'installation de vaporisation de carburant (26) se ramifie en trois conduites de paires de cylindres (48, 49, 50) et chaque conduite de paire de cylindres (48 ; 49 ; 50) se ramifie en deux conduites de cylindres (51, 52 ; 53, 54 ; 55, 56) qui débouchent dans les tubulures d'aspiration individuelles (15) de cylindres (1, 6 ; 5, 2 ; 3, 4) qui ne correspondent pas à l'ordre d'allumage direct (1-5-3-6-2-4).

5. Moteur à combustion interne selon l'une quelconque des revendications 3 ou 4,
caractérisé en que
les conduites de cylindres (41-44 ; 51-56) débouchent à proximité des soupapes d'admission (14) dans chaque tubulure d'aspiration individuelle (15).

6. Moteur à combustion interne selon la revendication 5,
caractérisé en que
les points de dérivation des trois conduites (38, 41, 42 ; 39, 43, 44 ; 48, 51, 52 ; 49, 53, 54 ; 50, 55, 56) ont une forme de Y.

7. Moteur à combustion interne selon l'une quelconque des revendications 5 ou 6,
caractérisé en que
les points de dérivation des trois conduites (38, 41, 42 ; 39, 43, 44 ; 48, 51, 52 ; 49, 53, 54 ; 50, 55, 56) forment entre eux un angle aussi aigu que possible entre les conduites (41, 42 ; 43, 44 ; 51, 52 ; 53, 54 ; 55, 56).
